# EUROPÄISCHE PATENTANMELDUNG

(11) **EP 1 074 794 A2**
(43) Veröffentlichungstag der Anmeldung: **07.02.2001**
(21) Anmeldenummer: 00116820.2
(22) Anmeldetag: 04.08.2000
(51) Int. Cl.: F24D 5/00, F01N 3/26, F01N 5/02

(54) **Anlage zur Behandlung von Gegenständen**

(30) Priorität: 06.08.1999 DE 19936515
(71) Anmelder: ECO-DRUCK GmbH Buch- und Offsetdruck, 71522 Backnang (DE)
(72) Erfinder: Schmied, Erich, 71522 Backnang (DE); Stumpf, Bruno, 97941 Tauberbischofsheim-Impfingen (DE)
(74) Vertreter: Patentanwalts-Partnerschaft Rotermund + Pfusch

(57) **Zusammenfassung**

Die Erfindung betrifft eine Anlage (1) zur Behandlung von Gegenständen, bei der schadstoffbeladene Abluft gebildet wird. Die Anlage (1) umfaßt eine Vorrichtung zur Abluftreinigung mittels thermischer Nachverbrennung mit mindestens einer Brennkammer (37), in welche die zu reinigende Abluft und bedarfsabhängig ein Brennstoff eingeleitet werden und in welcher eine Nachverbrennung der zu reinigenden Abluft und des Brennstoffes stattfindet. Bei dieser Nachverbrennung entsteht gereinigte Abluft.

Um die ökologische Energiebilanz einer derartigen Anlage (1) zu verbessern, wird vorgeschlagen, daß die Vorrichtung zur Abluftreinigung wenigstens eine Brennkraftmaschine (15) aufweist, daß die Brennkammer (37) für die Nachverbrennung in der Brennkraftmaschine (15) ausgebildet ist und daß die Brennkraftmaschine (15) durch die Nachverbrennung einen mechanischen Antriebsstrang antreibt.

## Beschreibung

Die Erfindung betrifft eine Anlage zur Behandlung von Gegenständen, bei der schadstoffbeladene Abluft gebildet wird, mit den Merkmalen des Oberbegriffes des Anspruches 1.

Derartige Anlagen werden bevorzugt in der Kunststoff-, Lackier- und Beschichtungsindustrie sowie in Druckereien eingesetzt. Dort werden Gegenstände, z.B. Bodenbeläge, Druckereierzeugnisse, Folien, Fahrzeuge, hergestellt oder z.B. mit einer Lackierung, Beschichtung oder mit einem Aufdruck versehen, die für eine rasche Weiterbehandlung möglichst schnell getrocknet werden müssen. Zu diesem Zweck werden die Gegenstände einer Heizeinrichtung zugeführt, in welcher durch Wärmezufuhr dieser Trocknungsvorgang beschleunigt wird. Beim Erwärmen der Gegenstände dampfen (hochsiedende) Lösemittelkomponenten der jeweils verwendeten Bindemittel aus, wodurch der Gegenstand bzw. der Aufdruck, die Lackierung oder Beschichtung des Gegenstandes trocknet. Zweckmäßigerweise arbeitet eine solche als Trockner wirkende Heizeinrichtung mit aus der Umgebung angesaugter Zuluft, die in der Heizeinrichtung erwärmt wird. Mit dieser erwärmten Zuluft werden dann die Gegenstände beaufschlagt, um die zur Trocknung erforderliche Erwärmung zu erzielen. Dabei vermischen sich die ausdampfenden Lösemittel mit der zugeführten Luft und werden mit der Abluft aus der Heizeinrichtung bzw. aus dem Trockner abgeführt. Diese Lösemittel gelten in der Regel als Schadstoffe, so daß die damit beladene Abluft nicht direkt in die Umgebung emitiert werden darf. Zur Reinigung der schadstoffbeladenen Abluft stehen verschiedene Abluftreinigungsvorrichtungen zur Verfugung, die nach verschiedenen Funktionsprinzipien arbeiten. Beispielsweise gibt es Adsorptionsvorrichtungen, die Feststoffe, z.B. Aktivkohle, enthalten, an deren Oberfläche die Schadstoffe angelagert werden. Bei regenerativen Systemen können die Schadstoffe in Regenerationszyklen desorbiert und entsorgt bzw. recycelt werden.

Des weiteren gibt es Nachverbrennungsvorrichtungen, die im Unterschied zu den Adsorptionsvorrichtungen mit einer chemischen Umwandlung der Schadstoffe arbeiten, was regelmäßig mit einer Temperaturerhöhung einhergeht. Bei Nachverbrennungsvorrichtungen unterscheidet man zwischen katalytischer Nachverbrennung, bei der auf einem relativ niedrigen Temperaturniveau eine Schadstoffumwandlung mittels Katalysatorelementen erfolgt, und thermischer Nachverbrennung, bei der vorzugsweise mit Hilfe eines Zusatzbrennstoffes bei einer relativ hohen Reaktionstemperatur die Schadstoffe verbrannt werden. Thermische Abluftreinigungsvorrichtungen lassen sich bei nahezu allen brennbaren organischen Schadstoffen einsetzen, unabhängig davon, ob diese in Nebel-, Dampf- oder Gasform vorliegen.

Nachverbrennungsvorrichtungen, wie sie bei herkömmlichen An lagen der eingangs genannten Art verwendet werden, sind beispielsweise aus dein Prospekt 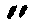 Abluftreinigung" aus dem Produktbereich Umwelttechnik der Firma Eisenmann, aus dem Prospekt 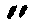 Abgas-/Abluftreinigung-Flüssigrückstandsverbrennung" der Firma Kraftanlagen Energie- und Umwelttechnik GmbH sowie aus dem Prospekt 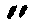 Komplette Systemlösungen in der Abluftreinigung" aus dem Produktbereich Umwelttechnik der Firma Dürr bekannt. Die bekannten thermischen Nachverbrennungsvorrichtungen arbeiten stets nach demselben Prinzip, wonach in eine Brennkammer die schadstoffhaltige Abluft zusammen mit einem Brennstoff eingeleitet wird. In dieser Brennkammer erfolgt dann eine Verbrennung bzw. Nachverbrennung der BrennstoffAbluft-Mischung, wodurch die organischen Schadstoffe in Kohlendioxid und Wasser umgesetzt werden. Durch diese Nachverbrennung wird dann gereinigte Abluft gebildet. Bei modernen Nachverbrennungsvorrichtungen sind verschiedene Möglichkeiten bekannt, die bei der Nachverbrennung freigesetzte Energie neben der Abluftreinigung auch für andere Zwecke einzusetzen. Beispielsweise wird die erhitzte gereinigte Abluft zur Vorwärmung der verunreinigten Abluft verwendet, bevor diese der Nachverbrennung zugeführt wird. Außerdem kann die Brennkammer in einen Wärmetauscher eingebettet sein, in dem eine Warmeträgerflüssigkeit zirkuliert, die beispielsweise zur Warmwassererzeugung verwendet werden kann.

Die vorliegende Erfindung beschäftigt sich mit dem Problem, für eine Anlage der eingangs genannten Art eine Ausführungsform anzugeben, die eine verbesserte Ausnutzung der bei der Nachverbrennung freigesetzten Energie ermöglicht.

Dieses Problem wird erfindungsgemäß durch eine Anlage mit den Merkmalen des Anspruches 1 gelöst.

Die Erfindung beruht auf dem allgemeinen Gedanken, die thermische Nachverbrennung zur Reinigung der schadstoffbeladenen Abluft in der Brennkammer bzw. in den Brennkammern einer Brennkraftmaschine, wie z.B. eines Kolbenmotors oder eines Turbinenantriebes, durchzuführen. Durch den erfindungsgemäßen Vorschlag wird direkt mechanische Antriebsenergie zur Verfügung gestellt, die in herkömmlicher Weise an einem Antriebsstrang der Brennkraftmaschine abgreifbar ist. Zweckmäßigerweise kann die Brennkraftmaschine über ihren Antriebsstrang z.B. einen Generator antreiben, um elektrische Energie zu erzeugen, die z.B. innerhalb der Anlage an verschiedene elektrische Verbraucher abgegeben werden kann. Daneben besteht außerdem die Möglichkeit, die Wärmeenergie der gereinigten Abluft, das heißt der Abgase der Brennkraftmaschine, sowie die Wärmeenergie eines Kühlkreises der Brennkraftmaschine auszunutzen. Es ist klar, daß die Menge der zu reinigenden Abluft ausschlaggebend ist für die Entscheidung, ob ein Turbinenantrieb oder ob ein oder mehrere Kolbenmotoren zur Nachverbrennung eingesetzt werden sollen, ebenso entscheidet die Menge der zu reinigenden Abluft über die Anzahl der Brennkammern bzw. über Anzahl und Hubraum der Zylinder des Kolbenmotors bzw. der Kolbenmotoren.

Der Vorteil der erfindungsgernäßen Anlage liegt dann besonders deutlich auf der Hand, wenn die aus dem Abgas und dem Kühlkreis entnehmbare Wärmeenergie bereits den Wärmeenergiebedarf der Anlage deckt, so daß die bereitgestellte mechanische oder elektrische Energie unter Berücksichtigung des Brennstoffbedarfes einen Gewinn gegenüber herkömmlichen Anlagen darstellt.

Bei einer Anlage, die mit einer Heizeinrichtung ausgestattet ist, die zum Betrieb Wärmeenergie benötigt, kann entsprechend einer vorteilhaften Ausführungsform diese Warmeenergie zumindest teilweise dem Abgas der Brennkraftmaschine entzogen werden, wobei das Abgas durch eine Abführungsleitung aus der Brennkammer austritt und wobei diese Abführungsleitung mit der Heizeinrichtung wärmeübertragend, z.B. über einen Wärmetauscher, gekoppelt ist. Bei einer besonders vorteilhaften Weiterbildung saugt die vorgenannte Heizeinrichtung durch eine Ansaugleitung aus der Umgebung Zuluft an, erwärmt diese und beaufschlagt mit der erwärmten Zuluft den zu behandelnden Gegenstand, wobei sich die schadstoffbeladene Abluft bildet, die über eine entsprechende Zuführungsleitung der Brennkammer bzw. der Brennkraftmaschine zur Nachverbrennung zugeleitet wird. Erfindungsgemäß wird die Ansaugleitung wärmeübertragend, insbesondere über einen Wärmetauscher, mit der Abführungsleitung gekoppelt, so daß die Erwärmung der Zuluft durch die Abwärme der gereinigten Abluft erfolgt. Bei einer entsprechenden Dimensionierung kann dadurch ein Zuheizen in der Heizeinrichtung, z.B. über separate Gasbrenner, entfallen oder zumindest beträchtlich reduziert werden.

Zweckmäßigerweise ist die Brennkraftmaschine mit einem Kühlkreis ausgestattet. Sofern dann die Anlage eine Kühleinrichtung mit einer Absorptionskältemaschine umfaßt, die einen Kühlkreis und einen Heizkreis aufweist, kann entsprechend einer vorteilhaften Ausführungsform der Heizkreis der Kältemaschine durch den Kühlkreis der Brennkraftmaschine gebildet oder mit diesem wärmeübertragend, insbesondere über einen Wärmetauscher, gekoppelt sein. Zusätzlich kann der Heizkreis der Kältemaschine noch mit der Abführungsleitung der Brennkraftmaschine wärmeübertragend, z.B. über einen Wärmetauscher, gekoppelt sein. Zur Kühlung der Brennkraftmaschine nimmt der zugehörige Kühlkreis Energie auf, die hier vorteilhaft zum Antrieb bzw. zum Betrieb der Kältemaschine verwendet werden kann, so daß auch hier eine hochgradige Energieausnutzung erzielt wird.

Mittels eines Generators, der an den Antriebsstrang der Brennkraftmaschine angeschlossen werden kann, läßt sich elektrische Energie erzeugen, welche die Energieversorgung der kompletten Anlage bzw. eines Gebäudes, in dem die Anlage untergebracht ist, unterstützt oder sogar von anderen Stromquellen unabhängig macht. Je nach dem kann auch eine Netzeinspeisung der erzeugten Elektrizität durchgeführt werden. Hier zeigt sich ein weiterer ökonomischer Vorteil der erfindungsgemäßen Anlage, denn durch die anlageninterne Stromerzeugung wird der von extern zuzuführende Strombedarf reduziert, wodurch sich entsprechende Bereitsstellungsgebühren der Netzbetreiber beträchtlich reduzieren lassen.

Bei einer Weiterbildung kann außerdem die Zuführungsleitung, die erwärmte, schadstottbeladene Abluft der Brennkammer bzw. der Brennkraftmaschine zuführt, mit einer Zentralheizung wärmeübertragend, z.B. über einen Wärmetauscher, gekoppelt sein, wobei diese Zentralheizung beispielsweise zur Beheizung eines Gebäudes dient, in dem die Anlage untergebracht ist.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

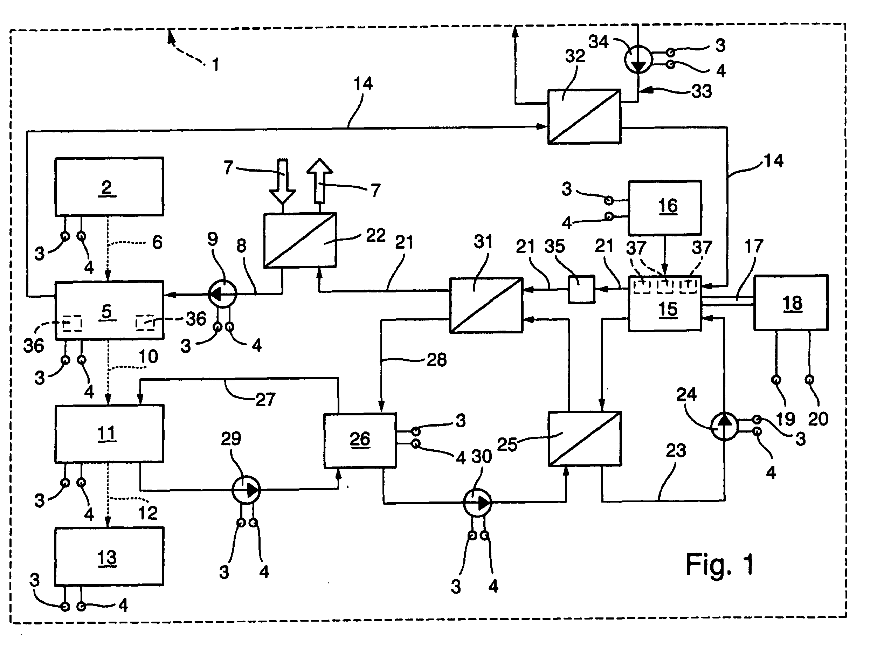

Die einzige Fig. 1 zeigt eine schaltplanartige Prinzipskizze einer erfindungsgemäßen Anlage.

Die in Fig. 1 dargestellte Anlage 1 ist beispielhaft durch eine Offsetdruckanlage, insbesondere Rollenoffsetdruckanlage, gebildet, wobei in Fig. 1 lediglich einige Stationen dieser Druckanlage 1 dargestellt sind. Die Anlage 1 nach der Erfindung ist in Fig. 1 durch einen mit unterbrochenen Linien dargestellten Rahmen gekennzeichnet.

Die Druckanlage 1 weist eine Druckstation 2 auf, die über Stromanschlusse 3 und 4 an eine Stromversorgung angeschlossen ist, und führt vorzugsweise einen Rollenoffset-Akzidenzdruck aus. In der Druckstation 2 wird ein Druckerzeugnis mit einem Aufdruck versehen, wobei entsprechende Farben auf das jeweilige Druckerzeugnis aufgetragen werden. Das bedruckte Druckerzeugnis wird dann einer Trockenstation 5 zugeführt, was durch einen gepunkteten Pfeil 6 angedeutet ist. In der Trockenstation 5, die nach Art einer Heatset-Trocknung arbeitet, wird das bedruckte Erzeugnis mit erwärmter Zu-/Umluft beaufschlagt, die aus einer Umgebung 7 angesaugt und über eine entsprechende Ansaugleitung 8 der Trockenstation 5 zugeleitet wird. In der Ansaugleitung 8 ist dazu ein geeignetes Gebläse 9 angeordnet, das ebenfalls Anschlüsse 3 und 4 zum Anschluß an eine Stromversorgung aufweist. Ebenso weist die Trockenstation 5 Stromanschlüsse 3 und 4 auf. Bei herkömmlichen Trockenstationen erfolgt die Erwarmung der Zuluft durch hier mit unterbrochenen Linien dargestellte Gasbrenner 36, die in der Trockenstation 5 angeordnet sind. Auch die erfindungsgemäße Anlage 1 kann optional solche Gasbrenner 36 aufweisen. Durch die Erwärmung des Druckerzeugnisses wird die Druckfarbe getrocknet sowie verfestigt und gehärtet. Ein derartiges Druckverfahren wird auch als 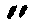 Heatset-Rollenoffset" bezeichnet.

Nach der Trocknung des Druckerzeugnisses wird dieses entsprechend einem gepunkteten Pfeil 10 einer Kühlstation 11 zugeführt, in welcher das Druckerzeugnis stark gekühlt wird. Auch die Kühlstation 11 ist über Anschlüsse 3 und 4 an die Stromversorgung angeschlossen. Nach der Kühlstation 11 wird das gekühlte Druckerzeugnis entsprechend einem Pfeil 12 z.B. einer Falzstation 13 zugeführt, in welcher weitere Bearbeitungsschritte zur Bearbeitung bzw. Behandlung des Druckerzeugnisses durchgeführt werden. Auch diese Falzstation 13 ist über Anschlüsse 3 und 4 an die Stromversorgung angeschlossen.

Bei der Behandlung des Druckerzeugnisses zum Trocknen der Druckerfarbe in der Trockenstation 5 dampfen vor allem Lösungsmittelkomponenten sowie Mineralölkomponenten aus den Druckfarben bzw. aus den Bindemitteln der Druckfarben aus und kontaminieren die für die Erwärmung verwendete Luft. Auf diese Weise wird eine schadstoffbeladene Abluft erzeugt, die vor ihrer Emission in die Umwelt 7 im Sinne einer Reinigung aufbereitet werden muß.

Es ist klar, daß die vorliegende Erfindung nicht auf eine Druckanlage oder auf die Trockenstation 5 einer Druckanlage beschränkt ist, sondern daß grundsätzlich jede Anlage 1, bei der im Betrieb schadstoffhaltige Abluft entsteht, zur Anwendung der Erfindung geeignet ist.

Die schadstoffbeladene Abluft wird mittels einer Zuführungsleitung 14 einer Brennkraftmaschine 15 zugeführt, die hier durch einen Kolbenmotor gebildet ist. Anstelle eines Kolbenmotors 15 können bei entsprechenden Abluftvolumenströmen auch mehrere Kolbenmotoren 15 oder ein Turbinenantrieb verwendet werden. Die Brennkraftmaschine 15 enthält wenigstens eine, hier drei, mit unterbrochenen Linien dargestellte Brennkammern 37, die bei einem Kolbenmotor jeweils durch die Brennräume der einzelnen Zylinder gebildet werden. Über die Zuführungsleitung 14 wird demnach die kontaminierte Abluft den Brennkammern 37 der Brennkraftmaschine 15 zugeführt. Des weiteren wird die Brennkraftmaschine 15 über eine Brennstoffversorgungsanlage 16 mit einem geeigneten Brennstoff, z.B. Erdgas, versorgt. Auch die Brennstoffversorgungsanlage 16 ist mit Stromanschlussen 3 und 4 an die Stromversorgung angeschlossen.

In den Brennkammern 37 der Brennkraftmaschine 15 wird vorzugsweise aus der schadstoffbeladenen Abluft und dem bedarfsabhängig zugegebenen Brennstoff ein zündfähiges Gemisch erzeugt und gezündet. Die Menge an zugeführtem Brennstoff hängt von der Art und Konzentration der Schadstoffe in der zu reinigenden Abluft ab. In einem Extremfall kann bereits die verunreinigte Abluft ein ausreichend zündfähiges Gemisch bilden, so daß kaum oder keine Brennstoffzufuhr erforderlich ist. Die Abluftreinigung kann dann besonders vorteilhaft mittels Nachverbrennung in der Brennkraftmaschine 15 durchgeführt werden, wenn die Abluft mit gasförmigen Schadstoffen beladen ist. Die bei der Nachverbrennung in der Brennkraftmaschine 15 freigesetzte Energie wird zumindest teilweise an eine Antriebswelle 17 abgegeben, die einen Generator 18 antreibt. Dieser Generator 18 erzeugt Strom und speist diesen bei 19 und 20 in eine Stromversorgungsanlage ein, an welche vorzugsweise sämtliche Stromverbraucher der Anlage 1 angeschlossen sind.

Anstelle einer einzigen Brennkraftmaschine 15 können auch mehrere Brennkraftmaschinen parallel mit der schadstoffbeladenen Abluft versorgt werden, um eine entsprechend größere Menge an Abluft zu verarbeiten. Die Antriebsstränge 17 der einzelnen Brennkraftmaschinen 15 können dann jeweils an einen separaten Generator oder an einen gemeinsamen Generator 18 angeschlossen werden.

Durch die Verbrennung der schadstoffbeladenen Abluft in den Brennkammern 37 der Brennkraftmaschine 15 erfolgt eine chemische Umsetzung der Schadstoffe, so daß gereinigte Abluft als Abgas die Brennkraftmaschine 15 durch eine Abführungsleitung 21 verläßt. Beispielsweise werden organische Schadstoffe in Kohlendioxid und Wasser umgesetzt. Die Abführungsleitung 21 führt die gereinigte Abluft in die Umgebung 7 ab.

Die bei der Nachverbrennung der schadstoffhaltigen Abluft in den Brennkammern 37 der Brennkraftmaschine 15 freigesetzte Energie wird auf vielfältige Weise ausgenutzt, um den ökologischen und ökonomischen Wirkungsgrad der Anlage 1 jeweils auf ein hohes Niveau zu bringen.

Nach der Verbrennung weist die gereinigte Abluft eine hohe Temperatur auf, die durch eine wärmeübertragende Kopplung zur Erwärmung der über die Ansaugleitung 8 aus der Umgebung 7 angesaugten Zuluft verwendet wird. Dabei kann die Erwärmung der Zuluft so hoch sein, daß eine Zuheizung durch die internen Gasbrenner 36 in der Trockenstation 5 entfallen kann. Die wärmeübertragende Kopplung zwischen Abführungsleitung 21 und Ansaugleitung 8 erfolgt dabei zweckmäßig über einen Wärmetauscher 22.

Die Brennkraftmaschine 15 weist einen Kühlkreis 23 auf, in dem ein Kühlmedium, insbesondere eine Kühlflüssigkeit, zirkuliert. Dementsprechend ist im Kühlkreis 23 eine Kühlmittelpumpe 24 angeordnet, die ebenfalls über Anschlüsse 3 und 4 an die Stromversorgung angeschlossen ist. Im Kühlkreis 23 der Brennkraftmaschine 15 ist ein Wärmetauscher 25 angeordnet, an dem die von der Brennkraftmaschine 15 abzuführende Wärmeenergie aus dem Kühlkreis 23 der Brennkraftmaschine 15 abgeführt wird.

Die Kühlstation 11 weist eine Absorptionkältemaschine 26 auf, die mit einem Kühlkreis 27 und mit einem Heizkreis 28 arbeitet. Sowohl im Kühlkreis 27 als auch im Heizkreis 28 ist jeweils eine Pumpe 29 bzw. 30 angeordnet, die ihrerseits jeweils über Anschlüsse 3 und 4 an die Stromversorgung angeschlossen sind. Auch die Absorptionskältemaschine 26 kann mit. Anschlüssen 3 und 4 an die Stromversorgung angeschlossen sein.

Die Wärmeenergie im Wärmeüberträgermedium des Heizkreises 28 liefert der Absorptionskältemaschine 26 die Energie, die zur Kühlung des Kühlmediums des Kühlkreises 27 erforderlich ist. Der Kühlkreis 27 bewirkt dann in der Kühlstation 11 die erforderliche Kühlung der Druckerzeugnisse.

Der Heizkreis 28 erhält seine Wärmeenergie durch Wärmeübertragung aus dem Kühlkreis 23 der Brennkraftmaschine 15, wozu der Heizkreis 28 der Absorptionskältemaschine 26 ebenfalls an den Wärmetauscher 25 angeschlossen ist. Darüber hinaus kann der Heizkreis 28 außerdem an einen weiteren Wärmetauscher 31 angeschlossen sein, der stromab der Brennkraftmaschine 15 an die Abführungsleitung 21 angeschlossen und so die Abführungsleitung 21 mit dem Heizkreis 28 wärmeertragend koppelt. Auf diese Weise kann eine zusätzliche Temperatursteigerung im Wärmeübertragungsmedium des Heizkreises 28 erreicht werden. Anstelle eines separaten Heizkreises 28 der Absorptionskältemaschine 26 und eines separaten Kühlkreises 23 der Brennkraftmaschine 15 kann auch ein gemeinsamer Kreis vorgesehen sein, der einerseits als Kühlkreis für die Brennkraftmaschine 15 und andererseits als Heizkreis für die Absorptionskältemaschine 26 dient.

Außerdem kann in der Zuführungslettung 14 stromab der Trokkenstation 5 ebenfalls ein Wärmetauscher 32 angeordnet sein, der mit einer Zentralheizung 33 wärmeübertragend gekoppelt ist. Diese Zentralheizung 33 dient beispielsweise zur Beheizung eines Gebäudes, in dem die komplette Anlage 1 untergebracht ist. Zur Zirkulation des Heizmittels der Zentralheizung 33, z.B. Wasser, kann ebenfalls eine Pumpe 34 vorgesehen sein, die mit den Anschlüssen 3 und 4 an die Stromversorgung angeschlossen ist. Die zur Trocknung verwendete erwärme Luft weist nach dem Trocknungsvorgang noch ausreichend Wärmeenergie auf, um eine geeignete Wärmequelle für die Zentralheizung 33 bilden zu können.

Des weiteren kann in der Abführungsleitung 21 stromab der Brennkraftmaschine 15 ein Oxidationskatalysator 35 angeordnet sein, der zusätzlich zur Verringerung der Schadstoffe im Abgas der Brennkraftmaschine 15 bzw. in der durch Nachverbrennung gereinigten Abluft dient. Außerdem kann eine als Kolbenmotor ausgebildete Brennkraftmaschine 15 mit einer Aufladeeinrichtung, z.B. mit einem Abgasturbolader, versehen sein, um die der Nachverbrennung zugeführte verunreinigte Abluft auf ein erhöhtes Druckniveau zu bringen. Derartige Maßnahmen können die Leistungsabgabe der Brennkraftmaschine 15 deutlich steigern.

Bei der erfindungsgemäßen Ausgestaltung der Anlage 1 kann durch den Betrieb der Brennkraftmaschine 15 ein zusätzliches Beheizen der Zuluft in der Trockenstation 5 entfallen, ebenso kann zusätzliche Energie zum Betreiben der Zentralheizung eingespart werden. Des weiteren kann die Kühlung in der Kühlstation 11 ohne zusätzliche Energiezufuhr auskommen und schließlich können sämtliche elektrischen Verbraucher der Anlage 1 durch den am Generator 18 zur Verfügung gestellten Strom mit elektrischer Energie versorgt werden. Darüber hinaus ist sogar eine Überproduktion an elektrischer Energie möglich, so daß eine Netzeinspeisung realisiert werden kann. Anstelle von Stromkosten und Strombereitstellungskosten könnten dann Einnahmen durch die Netzeinspeisung anfallen. Insgesamt kann durch die vorgeschlagene Anlage 1 die eingesetzte Energie hocheffizient ausgenutzt werden und einen besonders ökonomischen und ökologischen Betrieb gewährleisten.

Die hier beschriebene Anlage 1 kann für Ausnahmefälle, in denen zuviel kontaminierte Abluft produziert wird, zusätzlich mit einer herkömmlichen Nachverbrennungsvorrichtung ausgestattet sein.

## Patentansprüche

1. Anlage zur Behandlung von Gegenständen, bei der schadstoffbeladene Abluft gebildet wird, umfassend eine Vorrichtung zur Abluftreinigung (15) mittels thermischer Nachverbrennung mit mindestens einer Brennkammer (37), in welche die zu reinigende Abluft und bedarfsabhängig ein Brennstoff eingeleitet werden und in welcher eine Nachverbrennung der zu reinigenden Abluft und des Brennstoffes stattfindet, bei der gereinigte Abluft entsteht,
**dadurch gekennzeichnet,**
daß die Vorrichtung zur Abluftreinigung wenigstens eine Brennkraftmaschine (15) aufweist, daß die Brennkammer (37) für die Nachverbrennung in der Brennkraftmaschine (15) ausgebildet ist und daß die Brennkraftmaschine (15) durch die Nachverbrennung einen mechanischen Antriebsstrang (17) antreibt.

2. Anlage nach Anspruch 1,
**dadurch gekennzeichnet,**
daß die Anlage (1) eine Heizeinrichtung (5) umfaßt, die zum Betrieb Wärmeenergie benötigt, und daß diese Wärmeenergie zumindest teilweise dem Abgas der Brennkraftmaschine (15) entzogen wird, das durch eine Abführungsleitung (21) aus der Brennkraftmaschine (15) austritt, wobei diese Abführungsleitung (21) mit der Heizeinrichtung (5) wärmeübertragend gekoppelt ist.

3. Anlage nach Anspruch 2,
**dadurch gekennzeichnet,**
daß die Heizeinrichtung (5) durch eine Ansaugleitung (8) Umluft oder aus der Umgebung (7) Zuluft ansaugt, diese erwärmt und mit der erwärmten Zuluft den zu behandelnden Gegenstand beaufschlagt, wobei sich die schadstoffbeladene Abluft bildet, und daß die Ansaugleitung (8) wärmeübertragend mit der Abführungsleitung (21) gekoppelt ist, wodurch die Erwärmung der Zuluft erfolgt.

4. Anlage nach Anspruch 3,
**dadurch gekennzeichnet,**
daß eine Zuführungsleitung (14), welche die schadstoffbeladene Abluft der Brennkraftmaschine (15) zur Nachverbrennung zuleitet, mit einer Zentralheizung (33) wärmeübertragend gekoppelt ist, die zur Beheizung eines Gebäudes dient, in dem die Anlage (1) untergebracht ist.

5. Anlage nach einem der Ansprüche 1 bis 4,
**dadurch gekennzeichnet,**
daß die Anlage eine Kühleinrichtung (11) mit einer Absorptionskältemaschine (26) umfaßt, die einen Kühlkreis (27) und einen Heizkreis (28) aufweist, daß die Brennkraftmaschine (15) einen Kühlkreis (23) aufweist und daß der Heizkreis (28) der Kältemaschine (26) durch den Kühlkreis (23) der Brennkraftmaschine (15) gebildet oder mit diesem wärmeübertragend gekoppelt ist.

6. Anlage nach Anspruch 5,
**dadurch gekennzeichnet,**
daß der Heizkreis (28) der Kältemaschine (26) mit der Abführungsleitung (21) der Brennkraftmaschine (15) wärmeübertragend gekoppelt ist.

7. Anlage nach einem der Ansprüche 1 bis 6,
**dadurch gekennzeichnet,**
daß der Antriebsstrang (17) der Brennkraftmaschine (15) einen Generator (18) antreibt.

8. Anlage nach einem der Ansprüche 1 bis 7,
**dadurch gekennzeichnet,**
daß die jeweilige wärmeübertragende Kopplung durch mindestens einen Wärmetauscher (22, 25, 31, 32) erfolgt.

9. Vorrichtung zur Abluftreinigung mittels thermischer Nachverbrennung mit mindestens einer Brennkammer (37), in welche die zu reinigende Abluft und bedarfsabhängig ein Brennstoff eingeleitet werden und in welcher eine Nachverbrennung der zu reinigenden Abluft und des Brennstoffes stattfindet, bei der gereinigte Abluft entsteht,
**dadurch gekennzeichnet,**
daß wenigstens eine Brennkraftmaschine (15) vorgesehen ist, wobei die Brennkammer (37) für die Nachverbrennung in dieser Brennkraftmaschine (15) ausgebildet ist und wobei die Brennkraftmaschine (15) durch die Nachverbrennung einen mechanischen Antriebsstrang (17) antreibt.
